# EUROPEAN PATENT SPECIFICATION

(11) **EP 1 601 188 B1**
(45) Date of publication and mention of the grant of the patent: **20.12.2006**
(21) Application number: 04025448.4
(22) Date of filing: 26.10.2004
(51) Int. Cl.: H04N 5/225, H04N 5/232, G03B 17/16, H04N 1/00, H04N 1/32

(54) **Electronic camera with display and a multi-axis turning function**
Elektronische Kamera mit Bildschirm und mehrachsiger Drehfunktion
Caméra électronique avec affichage et possibilité de rotation autour de plusieurs axes

(30) Priority: 24.05.2004 CN 200420059305
(43) Date of publication of application: 30.11.2005
(73) Proprietor: Aiptek International Inc., Hsin-Chu (TW)
(72) Inventor: Su, Chih-Chung, Chu Pei City Hsin Chu Hsien (TW); Chang, Fei Peng, Hsin Chu City (TW)
(74) Representative: Viering, Jentschura & Partner

(56) References cited:
- US-B1- 6 483 542
- PATENT ABSTRACTS OF JAPAN vol. 1996, no. 05, 31 May 1996 (1996-05-31) -& JP 08 009213 A (KYOICHI NISHIZAWA), 12 January 1996 (1996-01-12)
- PATENT ABSTRACTS OF JAPAN vol. 1999, no. 08, 30 June 1999 (1999-06-30) -& JP 11 088735 A (MATSUSHITA ELECTRIC IND CO LTD), 30 March 1999 (1999-03-30)
- PATENT ABSTRACTS OF JAPAN vol. 1999, no. 09, 30 July 1999 (1999-07-30) -& JP 11 112846 A (SONY CORP), 23 April 1999 (1999-04-23)
- PATENT ABSTRACTS OF JAPAN vol. 2000, no. 12, 3 January 2001 (2001-01-03) -& JP 2000 258770 A (OLYMPUS OPTICAL CO LTD), 22 September 2000 (2000-09-22)
- PATENT ABSTRACTS OF JAPAN vol. 2000, no. 11, 3 January 2001 (2001-01-03) -& JP 2000 217016 A (CANON INC), 4 August 2000 (2000-08-04)

## Description

### BACKGROUND OF THE INVENTION

### 1. Field of the Invention

The present invention relates to an electronic device with a multi-axis turning function, and more particularly to an electronic device with a multi-axis turning function of which a display can freely rotate to or turn to any direction in three dimensions.

### 2. Description of Prior Art

Generally, a traditional horizontal type digital still camera (DSC) or a traditional horizontal type digital video recorder (DVR) has two kinds of turning mechanism. One is a single axis turning mechanism; the other is a dual-axis turning mechanism, see for instance JP 8009 213 A, JP11088735 A or US 6483542 B1.

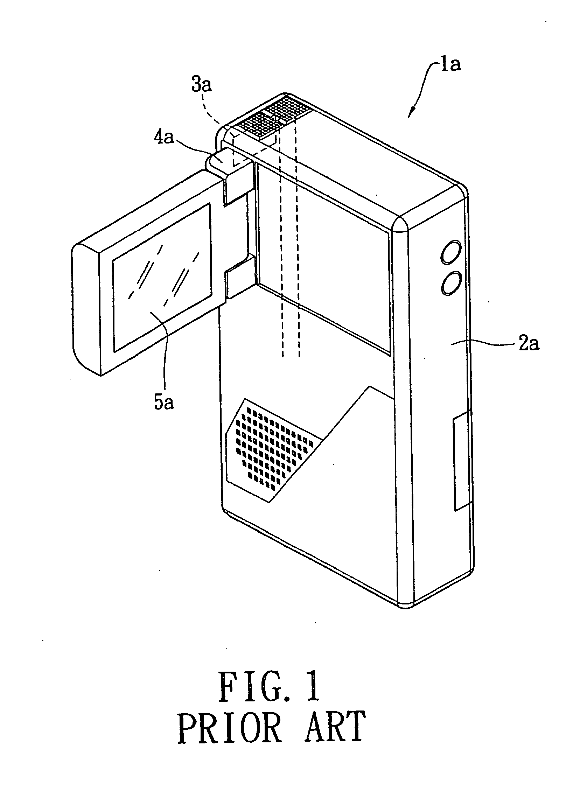

Fig. 1 shows a working status of a traditional horizontal type DVR, in which a single axis turning mechanism is applied. The DVR 1a comprises: a main body 2a, a lens 3a, a single axis turning mechanism 4a and a display 5a. For the limitation of the outline structure and turning mechanism of the DVR 1a, the display 5a has to be positioned on one sidewall of the main body 2a. The turning capacity of the traditional horizontal type DVR 1a with the single axis turning mechanism 4a is limited to a single dimension, i.e. the display 5a is turned during use, and closed when not in use.

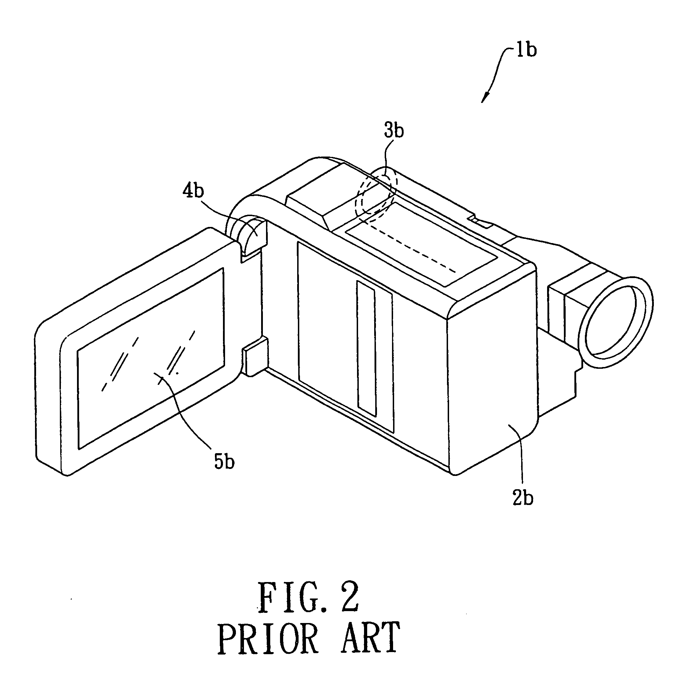

Fig. 2 shows a working status of a second traditional horizontal type DVR 1b with a dual-axis turning mechanism. As showed in Fig. 2, the traditional horizontal type DVR 1b comprises a main body 2b, a lens 3b, a dual-axis turning mechanism 4b, and a display 5b. Due to the limitation of the outline and turning mechanism of the DVR 1b, the display 5b has to be positioned on one sidewall of the main body 2b. The display 5b of the second traditional horizontal type DVR 1b with the dual-axis turning mechanism 4b is turned out during use, is closed up when not in use, and further is capable of rotating around an axis vertical to the main body 2b. In this way, user can maintain his/her angle of view regardless change of the shooting angle while using the DVR, which greatly improves the convenience of using a DVR.

However, due to the limitation of outline structure of the traditional DSC/DVR with the single-axis of dual-axis turning mechanism, the display turning capacity is still limited. The display must be positioned on one sidewall of the main body of the DC/DVR, and despite the fact that the display can be turned out and closed up in a first dimension and rotate in a second dimension, the display cannot implement real, two dimensional rotation, and further cannot turn freely in three dimensions.

It is thus desirable to provide an improved turning mechanism that overcomes the above-stated disadvantage of single or dual axis turning mechanism applied in a traditional horizontal type DC/DVR.

### SUMMARY OF THE INVENTION

Accordingly, an object of the present invention is to provide an electronic device with a multi-axis turning function, which can overcome the shortcomings of the prior art, in which the display must be position on one sidewall of the main body of the electronic device.

Another object of the present invention is to provide an electronic device with a multi-axis turning function, which is freely rotatable to any angle and can be applied in a DSC, a DVR or other similar electronic device.

Another object of the present invention is to provide an electronic device with a multi-axis turning function, which facilitates a user implementing a handheld, self-recording function.

To obtain the above objects, an electronic device with a multi-axis turning function according to the present invention comprises a main body, a rotation member, a display, an operation portion, a first pivot, a second pivot and a third pivot. The main body has a lens positioned on an end thereof and has a first axis co-axial with the lens. The rotation member is connected to the main body and has a second axis. The display is connected to the rotation member. The operation portion is connected to a lower end of the main body and has an area for functional keys formed thereon. The first pivot is defined between the main body and the rotation member, which is co-axial with the first axis of the main body. The rotation member is rotatable through the first pivot. The second pivot is defined between the rotation member and the display, which is co-axial with the second axis of the rotation member. The display is rotatable through the second pivot. The third pivot is defined between the main body and the operation portion. The main body and the operation portion are inter-rotatable through the third pivot.

### BRIEF DESCRIPTION OF THE DRAWINGS

Other objects, advantages, and novel features of the present invention will become more apparent from the following detailed description when taken in conjunction with the accompanying drawings, in which:
Fig. 1 shows a traditional horizontal type DVR in use, in which a single axis turning mechanism is applied;
Fig. 2 shows a second traditional horizontal type DVR with a dual-axis turning mechanism, in use;
Fig. 3 is an exploded perspective view of the present invention in which a display thereof is opened 90 degrees;
Fig. 4 is a perspective view of a DVR according to the present invention in which a display thereof is opened 90 degrees and turned 180 degrees;
Fig. 5 is a perspective view of a DSC according to the present invention in which a display thereof is opened 180 degrees and turned 180 degrees; and
Fig. 6 shows an electronic device according to the present invention while in use for self-recording, in which a display thereof is opened 90 degrees and a lens or a functional keys area thereof is turned 180 degrees.

### DETAILED DESCRIPTION OF PREFERRED EMBODIMENTS

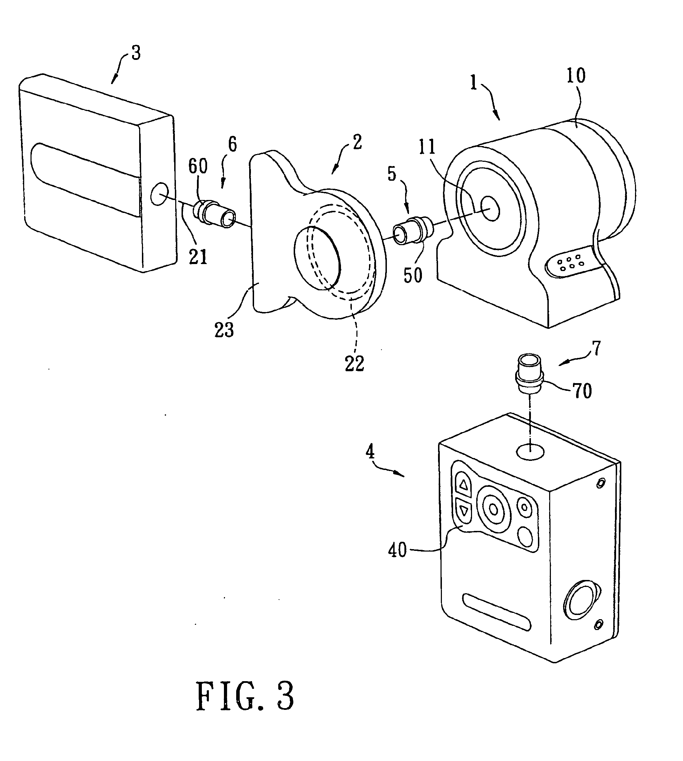

Referring to Fig. 3, the present invention provides an electronic device with a multi-axis turning function, which comprises a main body 1, a rotation member 2, a display 3, an operation portion 4, a first pivot 5, a second pivot 6 and a third pivot 7.

The lens 10 is defined on an end of the main body 1; the main body has a first axis 11 co-axial with the lens 10. The rotation member 2 is pivoted to the main body 1 via the first pivot 5 and has a second axis 21. The display 3 is pivoted to the rotation member 2 through the second pivot 6. The operation portion 4 has a functional keys area 40 formed thereon, which is connected to a lower end of the main body 1.

The first pivot 5 is defined between the main body 1 and the rotation member 2 so that the rotation member 2 can freely rotate to any angle relative to the first pivot 5. The first pivot 5 is co-axial with the first axis 11 of the main body 1 and further comprises at least a turning bearing 50 formed thereon.

The second pivot 6 is defined between the rotation member 2 and the display 3 so that the display 3 can freely rotate to any angle relative to the second pivot 6. The second pivot 6 is co-axial with the second axis 21 of the rotation member 2 and further comprises at least a turning bearing 60 formed thereon. The rotation member 2, the first pivot 5 and the second pivot 6 cooperate together to form a multi-axis turning mechanism so that the display 3 is freely rotatable in two dimensions.

The third pivot 7 is positioned between the main body 1 and the operation portion 4. The main body 1 and the operation portion 4 implement an inter-rotation in a random angle via the third pivot 7.

The rotation member 2 further comprises an angle position member 22 in order to position the display 3 at 90 degrees, 180 degrees or 270 degrees relative to the main body 1 when display 3 turns out in laterally from the main body 1. Thus, the display 3 is relatively independent and very flexible in adapting to different applications.

The rotation member 2 further comprises a primary plane 23 perpendicular to the first pivot 5. The display 3 can turn out horizontally from the main body 1 via the rotation member 2 and the first pivot 5.

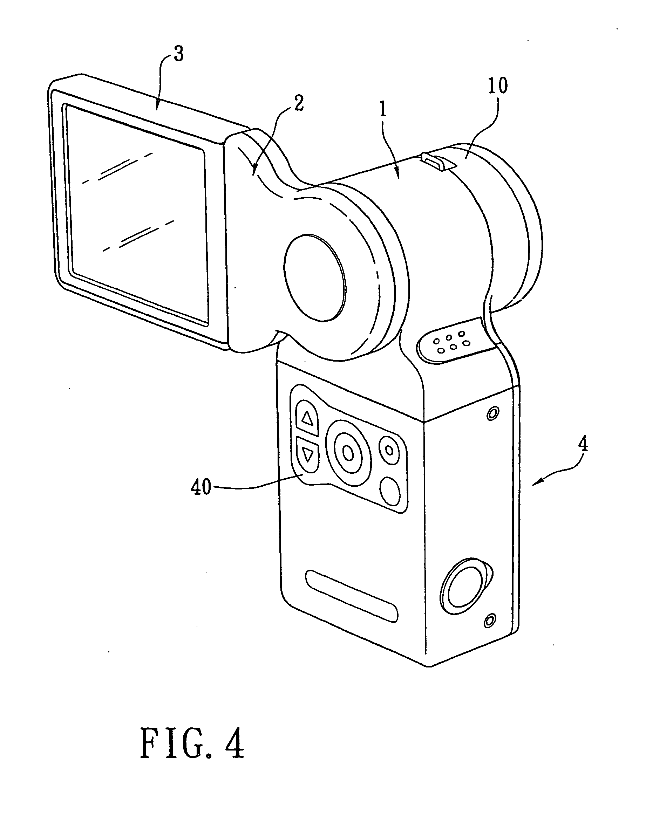

Fig. 4 is a perspective view of a DVR in which the present invention is applied. During use, the rotation member 2 is outwardly rotated 90 degrees and the display 3 is turned 180 degrees; in this way, the structure of the present invention fully meets use requirements for a DVR.

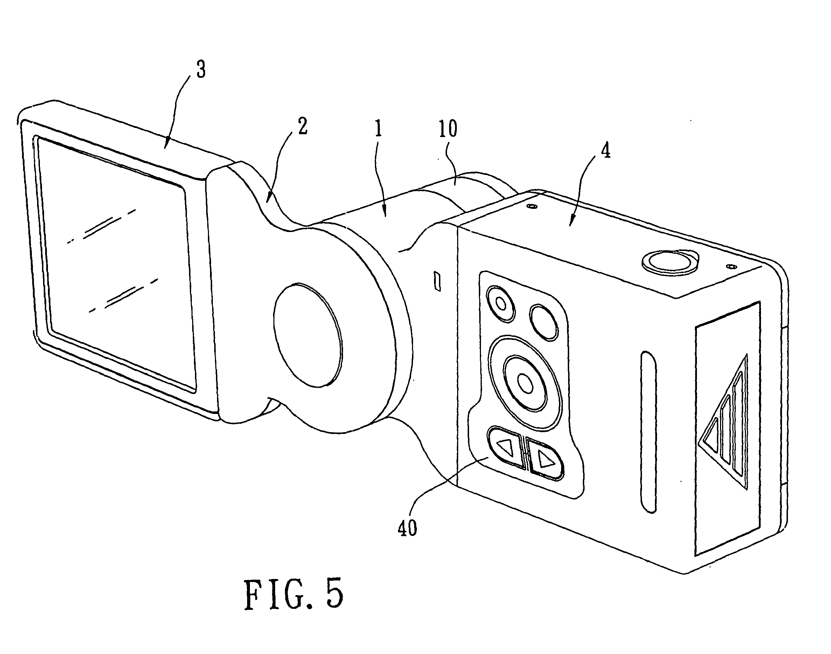

Fig.5 is a perspective view of a DSC in which the present invention is applied. During use, the rotation member 2 is outwardly rotated 180 degrees and the display 3 is turned 180 degrees; in this way, the structure of the present invention fully meets use requirements for a DSC.

However, the display 3 is not limited to application in a DVR or a DSC as described above. The display 3 of the electronic device is rotatable to any angle according to actual needs of user.

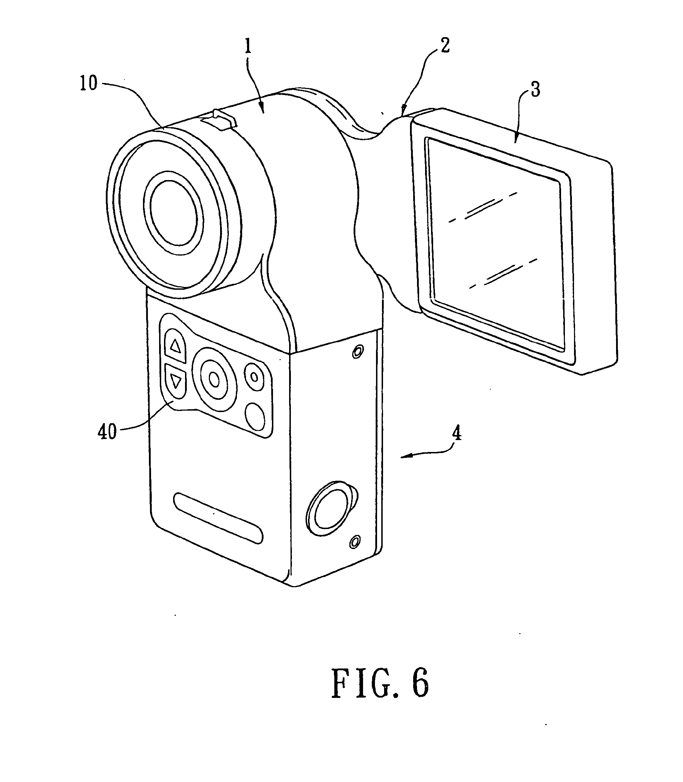

Fig. 6 shows a self-recording working status of an electronic device according to the present invention in which a display 3 thereof is opened 90 degrees and a lens 10 or a functional keys area 40 thereof is turned 180 degrees. When the electronic device is used for handheld self-recording, the functional keys area 40, the display 3 and the lens 10 thereof are adjusted to face the same direction in order to facilitate a user's adjustment of a shooting angle and the functional keys area 40 for a handheld, self-recording function.

In summary, the present invention has the following advantages:
(1) The present invention provides an electronic device with a multi-axis turning function in which the rotation member 2 and the lens 10 are constructed to be co-axial with each other, thereby overcoming the traditional shortcoming that the display must be positioned on one sidewall of the main body of the electronic device.
(2) The electronic device with a multi-axis turning function of the present invention is rotatable freely with random angles, so that it can be applied in a DSC, a DVR or other similar electronic devices.
(3) In the electronic device with a multi-axis turning function of the present invention, the lens 10, the functional keys area 40 and the display 3 are rotatable to face a direction of the user so as to facilitate a handheld, self-recording function.

It is to be understood that many other possible modifications and variations can be made without departing from the scope of the invention as hereinafter claimed.

## Claims

1. An electronic device with a multi-axis turning function, comprising:
a main body (1) having a lens (10) positioned on an end thereof, the main body (1) further having a first axis (11) co-axial with the lens;
a rotation member (2) connected to the main body and having a second axis (21);
a display (3) connected to the rotation member;
a first pivot (5) defined between the main body and the rotation member, wherein the first pivot (5) is co-axial with the first axis (11) of the main body (1), and the rotation member (2) is rotatable through the first pivot (5), and
a second pivot (6) defined between the rotation member (2) and the display (3); wherein the second pivot (6) is co-axial with the second axis (21) of the rotation member (2) and the display (3) is rotatable through the second pivot (6).

2. The electronic device with a multi-axis turning function as claimed in claim 1, wherein the electronic device is a combination of a digital still camera (DSC) and a digital video recorder (DVR).

3. The electronic device with a multi-axis turning function as claimed in claim 1, wherein the rotation member (2), the first pivot (5) and the second pivot (6) cooperate together to form a multi-axis turning mechanism, and the display (3) is rotatable through the multi-axis turning mechanism.

4. The electronic device with a multi-axis turning function as claimed in claim 1, wherein the rotation member (2) is randomly rotatable relative to the first pivot (5).

5. The electronic device with a multi-axis turning function as claimed in claim 1, wherein the rotation member (2) further comprises a primary plane (23) perpendicular to the first pivot (5).

6. The electronic device with a multi-axis turning function as claimed in claim 1, wherein the display (3) turns out and in laterally from the main body (1) via the rotation member (2) and the first pivot (5).

7. The electronic device with a multi-axis turning function as claimed in claim 1, wherein the rotation member (2) further comprises an angle position member (22) in order to position the display at 90 degrees, 180 degrees or 270 degrees relative to the main body (1) when the display (3) is turned out or in laterally from the main body (1).

8. The electronic device with a multi-axis turning function as claimed in claim 1, further comprising a third pivot (7) connected to an operation portion (4) on a lower end of the main body (1) and defined between the main body (1) and the operation portion (4), wherein the main body (1) inter-rotates with the operation portion (4) via the third pivot (7).

9. The electronic device with a multi-axis turning function as claimed in claim 8, wherein each of the first pivot (5), the second pivot (6) and the third pivot (7) further comprises a turning bearing (50,60,70).

10. The electronic device with a multi-axis turning function as claimed in claim 8, wherein the operation portion (4) further comprises a functional keys area, and the functional keys area (40), the display (3) and the lens (10) face a same direction when the electronic device is used for handheld self-recording.

## Patentansprüche

1. Elektronisches Gerät mit einer Mehrachsen-Drehfunktion, aufweisend:
einen Hauptkörper (1), der eine an seinem einen Ende angeordnete Linse (10) aufweist, wobei der Hauptkörper (1) ferner eine erste Achse (11) aufweist, die koaxial zu der Linse ist,
ein Drehelement (2), das mit dem Hauptkörper verbunden ist und das eine zweite Achse (21) aufweist,
eine Anzeige (3), die mit dem Drehelement verbunden ist,
ein erstes Drehgelenk (5), das zwischen dem Hauptkörper und dem Drehelement definiert ist, wobei das erste Drehgelenk (5) koaxial zu der ersten Achse (11) des Hauptkörpers (1) ist, und wobei das Drehelement (2) über das erste Drehgelenk (5) drehbar ist,
ein zweites Drehgelenk (6), das zwischen dem Drehelement (2) und der Anzeige (3) definiert ist, wobei das zweite Drehgelenk (6) koaxial zu der zweiten Achse (21) des Drehelementes (2) ist, und wobei die Anzeige (3) über das zweite Drehgelenk (6) schwenkbar ist.

2. Elektronisches Gerät mit einer Mehrachsen-Drehfunktion wie in Anspruch 1 beansprucht, wobei das elektronische Gerät eine Kombination einer digitalen Standbildkamera (DSC) und eines digitalen Videorekorders (DVR) ist.

3. Elektronisches Gerät mit einer Mehrachsen-Drehfunktion wie in Anspruch 1 beansprucht, wobei das Drehelement (2), das erste Drehgelenk (5) und das zweite Drehgelenk (6) so zusammenwirken, dass sie einen Mehrachsen-Drehmechanismus bilden, und wobei die Anzeige (3) über den Mehrachsen-Drehmechanismus schwenkbar ist.

4. Elektronisches Gerät mit einer Mehrachsen-Drehfunktion wie in Anspruch 1 beansprucht, wobei das Drehelement (2) relativ zu dem ersten Drehgelenk (5) beliebig drehbar ist.

5. Elektronisches Gerät mit einer Mehrachsen-Drehfunktion wie in Anspruch 1 beansprucht, wobei das Drehelement (2) ferner eine Hauptfläche (23) aufweist, die senkrecht zu dem ersten Drehgelenk (5) ist.

6. Elektronisches Gerät mit einer Mehrachsen-Drehfunktion wie in Anspruch 1 beansprucht, wobei die Anzeige (3) über das Drehelement (2) und das erste Drehgelenk (5) von dem Hauptkörper (1) heraus und seitwärts schwenkt.

7. Elektronisches Gerät mit einer Mehrachsen-Drehfunktion wie in Anspruch 1 beansprucht, wobei das Drehelement (2) ferner ein Winkelpositionselement (22) aufweist zum Positionieren der Anzeige auf 90 Grad, 180 Grad oder 270 Grad relativ zu dem Hauptkörper (1), wenn die Anzeige (3) von dem Hauptkörper (1) aus heraus oder seitwärts geschwenkt wird.

8. Elektronisches Gerät mit einer Mehrachsen-Drehfunktion wie in Anspruch 1 beansprucht, ferner ein drittes Drehgelenk (7) aufweisend, das an einem unteren Ende des Hauptkörpers (1) mit einem Betätigungsteil (4) verbunden ist und das zwischen dem Hauptkörper (1) und dem Betätigungsteil (4) definiert ist, wobei sich der Hauptkörper (1) über das dritte Drehgelenk (7) zu dem Betätigungsteil (4) verdreht.

9. Elektronisches Gerät mit einer Mehrachsen-Drehfunktion wie in Anspruch 8 beansprucht, wobei jedes von dem ersten Drehgelenk (5), dem zweiten Drehgelenk (6) und dem dritten Drehgelenk (7) ferner ein Drehlager (50, 60, 70) aufweist.

10. Elektronisches Gerät mit einer Mehrachsen-Drehfunktion wie in Anspruch 8 beansprucht, wobei das Betätigungsteil (4) ferner einen Funktionstastenbereich aufweist, und wobei der Funktionstastenbereich (40), die Anzeige (3) und die Linse (10) in eine gleiche Richtung weisen, wenn das elektronische Gerät für eine Handheld-Selbstaufnahme verwendet wird.

## Revendications

1. Dispositif électronique avec possibilité de rotation autour de plusieurs axes, comprenant :
un corps principal (1) avec un objectif (10) situé à une extrémité de celui-ci, le corps principal (1) ayant en outre un premier axe (11) coaxial avec l'objectif ;
un élément de rotation (2) relié au corps principal et ayant un deuxième axe (21) ;
un affichage (3) relié à l'élément de rotation;
un premier pivot (5) défini entre le corps principal et l'élément de rotation, dans lequel le premier pivot (5) est coaxial au premier axe (11) du corps principal (1) et l'élément de rotation (2) peut pivoter par le premier pivot (5), et
un deuxième pivot (6) défini entre l'élément de rotation (2) et l'affichage (3), dans lequel le deuxième pivot (6) est coaxial au deuxième axe (21) de l'élément de rotation (2) et l'affichage (3) peut pivoter par le deuxième pivot (6).

2. Dispositif électronique avec possibilité de rotation autour de plusieurs axes selon la revendication 1, dans lequel le dispositif électronique est une combinaison d'un appareil photo numérique (DSC) et d'un magnétoscope numérique (DVR).

3. Dispositif électronique avec possibilité de rotation autour de plusieurs axes selon la revendication 1, dans lequel l'élément de rotation (2), le premier pivot (5) et le deuxième pivot (6) coopèrent ensemble à former un mécanisme de rotation autour de plusieurs axes, et l'affichage (3) peut pivoter par le mécanisme de rotation autour de plusieurs axes.

4. Dispositif électronique avec possibilité de rotation autour de plusieurs axes selon la revendication 1, dans lequel-l'élément de rotation (2) peut pivoter de façon aléatoire par rapport au premier pivot (5).

5. Dispositif électronique avec possibilité de rotation autour de plusieurs axes selon la revendication 1, dans lequel l'élément de rotation (2) comprend en outre un plan principal (23) perpendiculaire au premier pivot (5).

6. Dispositif électronique avec possibilité de rotation autour de plusieurs axes selon la revendication 1, dans lequel l'affichage (3) tourne vers l'extérieur et l'intérieur latéralement à partir du corps principal (1) par l'élément de rotation (2) et le premier pivot (5).

7. Dispositif électronique avec possibilité de rotation autour de plusieurs axes selon la revendication 1, dans lequel l'élément de rotation (2) comprend en outre un élément de position d'angle (22) afin de positionner l'affichage à 90 degrés, 180 degrés ou 270 degrés par rapport au corps principal (1) lorsque l'affichage (3) est tourné vers l'extérieur ou l'intérieur latéralement à partir du corps principal (1).

8. Dispositif électronique avec possibilité de rotation autour de plusieurs axes selon la revendication 1, comprenant en outre un troisième pivot (7) relié à un module de fonctionnement (4) sur une extrémité inférieure du corps principal (1) et défini entre le corps principal (1) et le module de fonctionnement (4), dans lequel le corps principal (1) est entraîné en rotation avec le module de fonctionnement (4) via le troisième pivot (7).

9. Dispositif électronique avec possibilité de rotation autour de plusieurs axes selon la revendication 8, dans lequel chacun des premier pivot (5), deuxième pivot (6) et troisième pivot (7) comprend en outre un palier de rotation (50, 60, 70).

10. Dispositif électronique avec possibilité de rotation autour de plusieurs axes tel que revendiqué dans la revendication 8, dans lequel le module de fonctionnement (4) comprend en outre une zone de touches fonctionnelles, et la zone de touches fonctionnelles (40), l'affichage (3) et l'objectif (10) sont orientés dans la même direction lorsque le dispositif électronique est utilisé comme enregistreur portable.
